# EUROPEAN PATENT APPLICATION

(11) **EP 1 898 061 A1**
(43) Date of publication of application: **12.03.2008**
(21) Application number: 07016939.6
(22) Date of filing: 29.08.2007
(51) Int. Cl.: F01N 3/035, F01N 3/08, F01N 3/20, F01N 9/00, F02D 41/02, F01N 3/023, F01N 3/025

(54) **Exhaust gas purification system and method for internal combustion engine**

(30) Priority: 30.08.2006 JP 2006233050
(71) Applicant: Toyota Jidosha Kabushiki Kaisha, Toyota-shi, Aichi-ken 471-8571 (JP)
(72) Inventor: Aoyama, Taro, Toyota-shi Aichi-ken, 471-8571 (JP)
(74) Representative: Kuhnen & Wacker

(57) **Abstract**

When the temperature T of the EHC is increased to the first target temperature T1, the temperature T of the EHC is estimated in a feed-forward manner (S103), and the amount of heat needed to increase the temperature T of the EHC to the first target temperature T1 is calculated based on the estimated temperature T of the EHC (S 105), and the amount of electric power applied to the electric heater is controlled based on the calculated heat amount (S 106). By incorporating this technique, an exhaust gas purification system and method for an internal combustion engine can be provided which, when increasing the temperature of an exhaust gas purifier carrying catalyst with an oxidizing property, prevents excessive or insufficient heating of the exhaust gas purifier.

## Description

### BACKGROUND OF THE INVENTION

### 1. Field of the Invention

The invention relates to an exhaust gas purification system and method for an internal combustion engine.

### 2. Description of the Related Art

An exhaust gas purification system for an internal combustion engine is known in which a filter carrying adsorption-reduction type NOx catalyst (will be referred to as "NOx catalyst" where necessary) is arranged in the exhaust system to remove nitrogen oxides (will be referred to as "NOx") and particulate matter (PM) contained in the exhaust gas.

In general, the NOx purification capacity of NOx catalyst carried by an exhaust gas purifier, such as the filter described above, is low when the temperature of the exhaust gas of the internal combustion engine is low. To cope with this, Japanese Patent Application Publication No. JP-9-222009 (JP-A-9-222009) proposes to provide an electric heater, an electrically-heated catalyst, or the like, as means for heating the exhaust gas purifier and increase the temperature of the exhaust gas purifier up to the activation temperature of the NOx catalyst by energizing the electric heater, or the like. A related technology is also recited in Japanese Patent Application Publication No. JP-5-214923 (JP-A-5-214923).

Meanwhile, the temperature of the exhaust gas purifier is influenced by the variation of the temperature of the exhaust gas entering the exhaust gas purifier and the variation of the amount of the reducing agent (e.g., fuel) contained in the exhaust gas, both of which may occur as the operation state of the internal combustion engine (e.g., engine load) changes. In such a case, proper control on the temperature of the exhaust gas purifier may be difficult unless the state of energization to the electric heater, or the like, (e.g., the energization duration, the amount of electric power applied) is controlled in accordance with the variations of the thermal conditions influencing the temperature of the exhaust gas purifier. For example, the exhaust gas purifier may be heated excessively, which could result in the heat deterioration of the exhaust gas purifier, and the exhaust gas purifier may fail to be heated to sufficiently.

### SUMMARY OF THE INVENTION

In view of the above, the invention provides a technology that, when heating an exhaust gas purifier carrying a catalyst with an oxidizing property using a heating device, prevents excusive and insufficient heating of the exhaust gas purifier.

To achieve this object, the principal feature of the invention lies in that the temperature of an exhaust gas purifier provided in an exhaust passage of an internal combustion engine is estimated and the amount of heat needed to increase the temperature of the exhaust gas purifier to a first target temperature is calculated and the heating device is controlled in a feed-forward manner based on the calculated amount of heat to heat the exhaust gas purifier as desired.

More specifically, an aspect of the invention relates to an exhaust gas purification system for an internal combustion engine, having: an exhaust passage one end of which is connected to the internal combustion engine and through which exhaust gas discharged from the internal combustion engine flows; an exhaust gas purifier provided in the exhaust passage and carrying a catalyst with an oxidizing property; a heating device that heats the exhaust gas purifier; a temperature estimation device that estimates the temperature of the exhaust gas purifier; a heat amount calculation device that calculates the amount of heat needed to increase the temperature of the exhaust gas purifier to a first target temperature based on the temperature of the exhaust gas purifier estimated by the temperature estimation device; and a temperature increase device that increases the temperature of the exhaust gas purifier by controlling the heating device so that heat of the amount calculated by the heat amount calculation device is applied from the heating device to the exhaust gas purifier.

Another aspect of the invention relates to an exhaust gas purification method for an internal combustion engine having: an exhaust passage one end of which is connected to the internal combustion engine and through which exhaust gas discharged from the internal combustion engine flows; an exhaust gas purifier provided in the exhaust passage and carrying a catalyst with an oxidizing property; a heating device that heats the exhaust gas purifier; and a temperature increase device that increases the temperature of the exhaust gas purifier by controlling the heating device. This method includes: estimating the temperature of the exhaust gas purifier; calculating the amount of heat needed to increase the temperature of the exhaust gas purifier to a first target temperature based on the estimated temperature of the exhaust gas purifier; and increasing the temperature of the exhaust gas purifier by applying the calculated amount of heat from the heating device to the exhaust gas purifier.

According to the exhaust gas purification system and method described above, for example, when the temperature of the exhaust gas purifier estimated by the temperature estimation device is lower than the first target temperature, the temperature increase device controls the heating device to heat the exhaust gas purifier as needed.

However, as the load on the internal combustion engine changes, the thermal conditions influencing the temperature of the exhaust gas purifier (e.g., the temperature of the exhaust gas entering the exhaust gas purifier) also change. In such a case, proper control on the temperature of the exhaust gas purifier may be difficult unless the amount of heat applied from the heating device to the exhaust gas purifier is controlled appropriately. For example, when the load on the internal combustion engine is increasing, the exhaust gas purifier may be heated excessively. Conversely, when the load on the internal combustion engine is decreasing, the exhaust gas purifier may fail to be heated sufficiently.

To counter this, in the invention, the amount of heat needed to increase the temperature of the exhaust gas purifier to the first target temperature is calculated based on the estimated temperature of the exhaust gas purifier and the first target temperature, and the calculated amount of heat is applied from the heating device to the exhaust gas purifier, so that the temperature of the exhaust gas purifier increases exactly as required.

The first target temperature is a target temperature to which the temperature of the exhaust gas purifier is increased by applying heat from the heating device to the exhaust gas purifier. The first target temperature may be set in advance. For example, the first target temperature may be set equal to the activation temperature of the oxidizing catalyst carried by the exhaust gas purifier or may be set to a value that is sufficiently larger than the activation temperature of the oxidizing catalyst and includes a given amount of tolerance.

In the exhaust gas purification system and method of the invention, the temperature of the exhaust purifier may be repeatedly estimated at given time intervals during the heating of the exhaust gas purifier. In this case, the amount of heat that is additionally needed to increase the temperature of the exhaust gas purifier to the first target temperature can be calculated continuously. That is, because the amount of heat needed to be applied to the exhaust purifier is calculated every time the temperature of the exhaust purifier is estimated, the heating of the exhaust gas purifier to the first target temperature can be more accurately performed in a feed-forward manner based on the heat amount calculated each time.

The above arrangement minimizes the difference between the amount of heat actually applied to the exhaust gas purifier and the amount of heat needed to be applied to the exhaust gas purifier to increase its temperature up to the first target temperature, thus preventing excessive and insufficient heating of the exhaust gas purifier.

The exhaust gas purifier employed in the invention may have any structure as long as it carries catalyst with an oxidizing property. For example, it may be an exhaust gas purifier carrying adsorption-reduction type NOx catalyst that adsorbs NOx in the exhaust gas when the air-fuel ratio of the exhaust gas entering the exhaust gas purifier is lean and reduces the NOx adsorbed therein when the air-fuel ratio of the exhaust gas entering the exhaust gas purifier is rich, that is, when a reducing agent is present in the same exhaust gas. Further, the exhaust gas purifier may be consisted of a catalyst unit carrying such adsorption-reduction type NOx catalyst and a filter provided in combination.

Further, the invention may incorporate any structure for applying heat to the exhaust gas purifier as long as it can apply a necessary amount of heat to the exhaust gas purifier. For example, the heating device may be an electric heater and the temperature increase device may be adapted to energize the electric heater so as to apply a necessary amount of heat to the exhaust gas purifier.

The electric heater may either be provided upstream of the exhaust gas purifier in the exhaust gas passage or may be incorporated in the exhaust gas purifier (e.g., provided as a portion of an electrically heated oxidizing catalyst).

The heating device employed in the invention may have any structure as long as it can apply a necessary amount of heat to the exhaust purifier. For example, the heating device may be a combustion burner, or the like.

The exhaust purification system of the invention may be such that the exhaust gas purifier is an exhaust gas purifier the exhaust gas purification capacity of which can be restored by supplying a reducing agent to the exhaust gas purifier, the temperature increase device further includes a reducing agent supply device that supplies the reducing agent to the exhaust gas entering the exhaust gas purifier, and when the estimated temperature of the exhaust gas purifier is equal to or higher than the first target temperature, the temperature increase device controls the reducing agent supply device to supply the reducing agent to the exhaust gas purifier so as to increase the temperature of the exhaust gas purifier up to a second target temperature that is higher than the first target temperature.

Further, the exhaust purification system of the invention may be such that the heat amount calculation device calculates the amount of reducing agent needed to increase the temperature of the exhaust gas purifier to the second target temperature, and the temperature increase device controls the reducing agent supply device to supply the reducing agent of the amount calculated by the heat amount calculation device to the exhaust gas entering the exhaust gas purifier.

When the exhaust gas purifier is a NOx catalyst unit, the process for accomplishing the aforementioned restoration of the exhaust gas purification capacity of the exhaust gas purifier is, for example, the NOx reduction process in which the air-fuel ratio of the exhaust gas entering the NOx catalyst unit is made rich so that the NOx adsorbed in the NOx catalyst is removed through reduction reactions or the SOx poisoning recovery process in which the air-fuel ratio of the exhaust gas entering the NOx catalyst unit is made rich while the bed temperature of the NOx catalyst is maintained at a high temperature (e.g., 600 to 650 °C) so that the SOx adsorbed in the NOx catalyst is removed through reduction reactions. Further, when the exhaust gas purifier is a filter carrying catalyst with an oxidizing property (will be simply referred to as "filter"), the process for accomplishing the aforementioned restoration of the exhaust gas purification capacity of the exhaust gas purifier is, for example, the PM removal process in which a reducing agent is supplied to the filter from the reducing agent supply device so that the filter is heated by the reaction heat generated through the oxidization of the supplied reducing agent and thus the particulate matter trapped in the filter is oxidized and thus removed.

Thus, for example, when restoring the exhaust gas purification capacity of the exhaust gas purifier, if the temperature of the exhaust gas purifier is lower than the first target temperature, the heat increase device first increases the temperature of the exhaust gas purifier up to the first target temperature by applying a given amount of heat from the heating device to the exhaust gas purifier and then to the second target temperature by supplying the reducing agent from the reducing agent supply device.

In the above case, preferably, the first target temperature is set larger than the activation temperature of the oxidizing catalyst carried by the exhaust gas purifier by at least a given amount of tolerance. By doing so, the reducing agent supplied to the exhaust gas purifier can be reliably oxidized at the exhaust gas purifier.

That is, in the above case, it is possible to prevent the supplied reducing agent from passing through the exhaust gas purifier to the downstream side without being oxidized, and also to prevent the temperature of the front end face of the exhaust gas purifier from deceasing below the activation temperature. Namely, it is possible to minimize the increase in the emission due to the release of the reducing agent to the ambient air and minimize the reduction of the fuel economy due to the waste of the reducing agent supplied from the reducing agent supply device.

The second target temperature is the final target temperature to which the temperature of the exhaust gas purifier is increased. The second target temperature is set in advance. The second target temperature may be set in accordance with the type of the process for restoring the exhaust gas purification capacity of the exhaust gas purifier. For example, the second target temperature may be differently set for the NOx reduction process, the SOx poisoning recovery process, and the PM removal process, respectively.

The reducing agent supply device may include a fuel addition valve that adds fuel into the exhaust gas or a fuel injection valve that performs a secondary injection on the power stroke or the exhaust stroke of the internal combustion engine.

For the purpose of increasing the accuracy in estimating the temperature of the exhaust gas purifier, the temperature estimation device may be adapted to estimate the temperature of the exhaust gas purifier based on at least the temperature of the exhaust gas entering the exhaust gas purifier (will be referred to as "incoming exhaust gas temperature" where necessary), the amount of heat that is generated when the reducing agent contained in the exhaust gas entering the exhaust gas purifier is oxidized at the oxidizing catalyst of the exhaust gas purifier (will be referred to as "reducing agent oxidization heat amount" where necessary), the thermal capacity of the exhaust gas purifier, and the flowrate of the exhaust gas entering the exhaust gas purifier.

That is, as described above, as the incoming exhaust gas temperature and/or the reducing agent oxidization heat amount change, the temperature of the exhaust gas purifier changes. For example, when the incoming exhaust gas temperature is higher than the temperature of the exhaust gas purifier, the temperate of the exhaust gas purifier increases due to the heat transferred from the exhaust gas. On the other hand, when the incoming exhaust gas temperature is lower than the temperature of the exhaust gas purifier, the temperature of the exhaust gas purifier decreases due to the heat radiation to the exhaust gas. Further, the incoming exhaust gas temperature changes as the load on the internal combustion engine changes. Therefore, in some cases, the temperature of the exhaust gas purifier changes as the load on the internal combustion engine changes.

Further, because the exhaust gas purifier is carrying the oxidizing catalyst, when the reducing agent contained in the exhaust gas enters the exhaust gas purifier, it causes oxidization reactions, whereby the exhaust gas purifier heats. That is, obviously, the temperature of the exhaust gas purifier changes as the amount of the unburned components from the fuel injected to be combusted in the internal combustion engine changes. Also, in the case where the temperature increase device is provided with the reducing agent supply device described above, the temperature of the exhaust gas purifier changes as the amount of the reducing agent supplied from the reducing agent supply device changes.

Thus, in the invention, the temperature of the exhaust gas purifier can accurately estimated because it is estimated by factoring in the incoming exhaust gas temperature and the reducing agent oxidization heat amount. Note that the reducing agent oxidization amount may be estimated based on the rate at which the reducing agent is oxidized at the exhaust gas purifier (will be simply referred to as "reducing agent oxidization rate" where necessary).

In the invention, further, the accuracy in estimating the temperature of the exhaust gas purifier can be increased by estimating it by factoring in the thermal capacity of the exhaust gas purifier and the flowrate of the exhaust gas entering the exhaust gas purifier (will be simply referred to as "incoming exhaust gas flowrate" where necessary). That is, obviously, the larger the thermal capacity of the exhaust gas purifier and the higher the incoming exhaust gas flowrate, the more difficult it is to increase the temperature of the exhaust gas purifier. Note that the incoming exhaust gas flowrate may be estimated based on the amount of intake air drawn into the internal combustion engine.

Further, when heat is being applied from the heating device to the exhaust gas purifier, the temperature of the exhaust gas purifier may be estimated by factoring in the amount of heat applied from the heating device.

Further, the amount of heat needed to increase the temperature of the exhaust gas purifier, which is estimated in any way described above, to the first target temperature may be calculated based on the difference between the first target temperature and the estimated temperature of the exhaust gas purifier, the thermal capacity of the exhaust gas purifier, and the incoming exhaust gas flowrate.

According to the invention, as such, when increasing the temperature of an exhaust gas purifier carrying catalyst with an oxidizing property using a heating device, the amount of heat applied from the heating device to the exhaust gas purifier is controlled in a feed-forward manner in accordance with the temperature of the exhaust gas purifier, whereby excessive and insufficient heating of the exhaust gas purifier is prevented.

### BRIEF DESCRIPTION OF THE DRAWINGS

The features, advantages thereof, and technical and industrial significance of this invention will be better understood by reading the following detailed description of preferred embodiments of the invention, when considered in connection with the accompanying drawings, in which:
FIG. 1 is a view schematically showing the configurations of an internal combustion engine according to the invention and the intake and exhaust systems thereof; and
FIG. 2 is a flowchart showing a heating routine executed in an exemplary embodiment of the invention.

### DETAILED DESCRIPTION OF THE EMBODIMENTS

In the following description and the accompanying drawings, the present invention will be described in more detail with reference to an exemplary embodiment.

Note that the dimensions, material, shape, and arrangement of each element recited in this exemplary embodiment of the invention do not limit the scope of the invention unless otherwise specified.

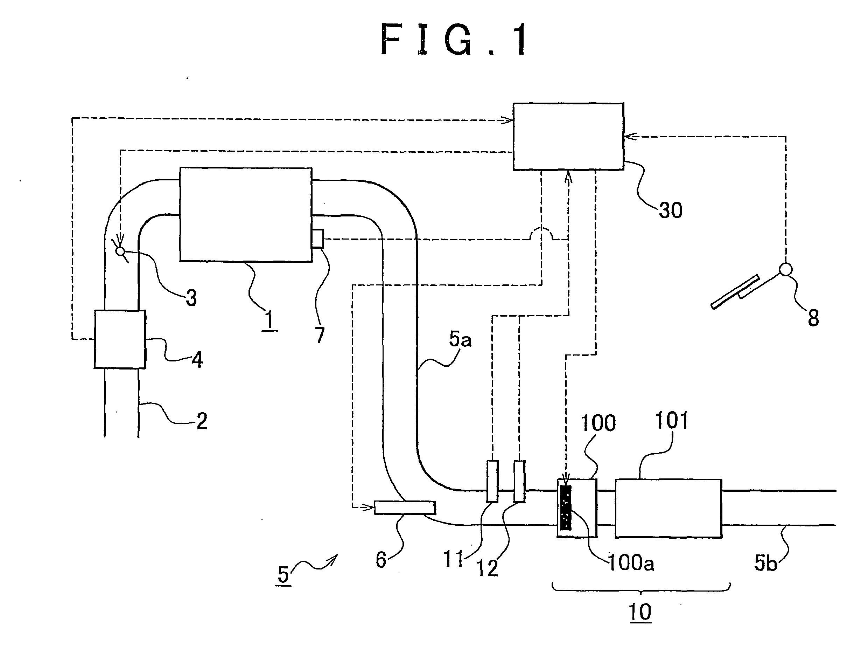

This exemplary embodiment refers to a case in which the invention is applied to a diesel engine for vehicles. FIG. 1 is a view schematically showing the configurations of an internal combustion engine 1 of the exemplary embodiment and its intake and exhaust systems. Referring to FIG. 1, an intake pipe 2 is connected to the internal combustion engine 1 so that the intake air is drawn into the internal combustion engine 1 though the intake pipe 2. In the intake pipe 2 is provided a throttle valve 3 that adjusts the flowrate of intake air flowing through the intake pipe 2. An airflow meter 4 is provided upstream of the throttle valve 3 in the intake pipe 2. The airflow meter 4 outputs electric signals corresponding to the amount of intake air flowing through the intake pipe 2.

Further, an exhaust pipe 5 is connected to the internal combustion engine 1 so that the exhaust gas is discharged from the internal combustion engine 1 through the exhaust pipe 5. The downstream end of the exhaust pipe 5 is connected to a muffler, not shown in the drawings. An exhaust gas purification unit 10 for removing particulate matter (e.g., soot) and NOx in the exhaust gas is provided midway in the exhaust pipe 5. Hereinafter, the portion of the exhaust pipe 5 upstream of the exhaust gas purification unit 10 will be referred to as "first exhaust pipe 5a" and the portion of the exhaust pipe 5 downstream of the exhaust gas purification unit 10 will be referred to as "second exhaust pipe 5b". Note that the first exhaust pipe 5a and the second exhaust pipe 5b in this exemplary embodiment correspond to "exhaust passage" of the invention.

The exhaust gas purification unit 10 is consisted of an EHC (Electrically Heated Catalyst) 100 that is an oxidizing catalyst incorporating an electric heater 100a that heats when energized and a filter 101 structured to trap the particulate matter in the exhaust gas and carrying adsorption-reduction type NOx catalyst. The EHC 100 and the filter 101 are arranged in series from the upstream side in this order. Note that, in this exemplary embodiment, the EHC 100 and the filter 101 correspond to "catalyst with an oxidizing property" of the invention and thus correspond to a portion of "exhaust gas purifier" of the invention. Further, in this exemplary embodiment, the electric heater 100a corresponds to "heating device" of the invention and thus corresponds to a portion of "temperature increase device" of the invention.

Referring to FIG. 1, a fuel addition valve 6 that is used to add fuel, as a reducing agent, into exhaust gas during the NOx reduction process for the filter 101 is provided in the first exhaust pipe 5a. Note that, in this exemplary embodiment, the fuel addition valve 6 corresponds to "reducing agent supply device" of the invention.

Further, a temperature sensor 11 for detecting the temperature of exhaust gas and an HC sensor 12 for detecting the concentration of HC in exhaust gas are provided upstream of the EHC 100 of the exhaust gas purification unit 10.

The internal combustion engine 1 having the foregoing configuration is provided with an ECU (Electronic Control Unit) 30 that controls the internal combustion engine 1 and the intake and exhaust systems thereof. The ECU 30 is adapted to execute various controls related to the EHC 100 and the filter 101, as well as those for controlling the operation state of the internal combustion engine 1 in accordance with the operation state of the internal combustion engine 1 and the driver's requests.

Various sensors used for controlling the operation state of the internal combustion engine 1, such as a crank position sensor 7 for detecting the speed of the internal combustion engine 1 and an accelerator position sensor 8 for detecting the opening degree of the accelerator pedal, are connected to the ECU 30 via electric lines. As well as these, the temperature sensor 11 and the HC sensor 12 are also connected to the internal combustion engine 1 via electric lines. The output signals of these sensors are input to the ECU 30. On the other hand, in-cylinder fuel injection valves provided in the internal combustion engine 1 (not shown in the drawings), the fuel addition valve 6, and the electric heater 100a are connected to the ECU 30 via electric lines, and these components are controlled by the ECU 30. In this exemplary embodiment, the state of the electric heater 100a is switched between an energized state and a non-energized state in accordance with the commands from the ECU 30, and the amount of electric power that is applied to the heater 100a for its energization is also controlled in accordance with the commands from the ECU 30.

The ECU 30 is consisted of a CPU (Central Processing Unit), a ROM (Read Only Memory), a RAM (Random Access Memory), and other components. The ECU 30 stores various control programs for controlling the internal combustion engine 1 and maps defining various data for controlling the internal combustion engine 1. The heating routine for heating the EHC 100 and the filter 101, which will be described later, is one of the programs stored in the ROM of the ECU 30.

Next, a description will be made of the control that is executed in the exhaust gas purification system of this exemplary embodiment in order to heat the EHC 100 and the filter 101. For example, during a SOx poisoning recovering reduction process in which the SOx adsorbed in the filter 101 is removed through reduction reactions, a control is executed which makes the air-fuel ratio of the exhaust gas entering the filter 101 rich while maintaining the filter 101 at a high temperature (e.g., 600 to 650 °C). Likewise, during a PM removal process in which the particulate matter trapped in the filter 101 is removed through oxidization, a control is executed which heats the filter 101 up to the temperature (e.g., 500 to 700 °C) at which the particulate matter can be oxidized (burned).

In this exemplary embodiment, in order to increase the temperatures of the EHC 100 and the filter 101, fuel, which serves as a reducing agent, is added from the fuel addition valve 6 to the exhaust gas. The added fuel is oxidized at the EHC 100 and this oxidization produces a reaction heat that increases the exhaust gas temperature. This high-temperature exhaust gas enters the filter 101 provided on the downstream side, whereby the temperature of the filter 101 increases accordingly. However, when the exhaust gas discharged from the internal combustion engine 1 is low, the temperatures of the catalysts carried by the EHC 100 and the filter 101 may be lower than their activation temperatures. In such a case, even if fuel is added from the fuel addition valve 6, the added duel is not oxidized at the EHC 100 and the filter 101, and therefore the temperatures of the EHC 100 and the filter 101 can not be increased as needed. To counter this, in this exemplary embodiment, when the temperature of the exhaust gas is low, the electric heater 100a is energized to heat the EHC 100 and the filter 101.

The temperature of exhaust gas discharged from the internal combustion engine 1 changes according to the engine load. Therefore, in this exemplary embodiment, the amount of electric power applied to the electric heater 100a is controlled in a feed-forward manner in accordance with the variation of the temperature of the exhaust gas entering the exhaust gas purification unit 10 and the amount of fuel added from the fuel addition valve 6 during the heating control that heats the EHC 100 and the filter 101 by energizing the electric heater 100a and during the heating control that heats the EHC 100 and the filter 101 by adding fuel from the fuel addition valve 6 to the exhaust gas after the heating control by the electric heater 100a, thus preventing excessive and insufficient heating of the EHC 100 and the filter 101.

During the heating control of the exemplary embodiment for the EHC 100 and the filter 101, the temperature of the EHC 100 is estimated, and if the estimated temperature is lower than a first target temperature, which has been set in advance, the electric heater 100a is energized such that the temperature of the EHC 100 increases up to the first target temperature. This heating of the EHC 100 is performed in order to increase the temperature of the filter 101 by distributing the heat generated in the EHC 100, which is located upstream of the filter 101, to the filter 101 together with the exhaust gas.

The first target temperature is set higher than the activation temperature of the EHC 100 by a given amount of tolerance. The first target temperature has been empirically determined in advance. The first target temperature may be differently set depending upon the purpose of increasing the temperatures of the EHC 100 and the filter 101. For example, the first target temperature may be set to a proper temperature for each process for restoring the exhaust gas purification capacity of the filter 101 (e.g., NOx reduction process, SOx poisoning recovery process, PM removal process).

For example, when the NOx reduction process or the PM removal process is performed to the filter 101, the first target temperature may be set to a temperature that maintains the catalysts carried by the EHC 100 and the filter 101 in the activated condition (e.g., 200 to 250 °C). Meanwhile, during the SOx poisoning recovery process for the filter 101, a relatively large amount of fuel is added from the fuel addition valve 6 as compared to during the NOx reduction process. Therefore, when the SOx poisoning recovery process is performed to the filter 101, the first target temperature may be set to a temperature that prevents the temperature of the catalyst carried by the filter 101 from decreasing below its activation temperature due to the latent heat that would be generated by the evaporation of the added fuel or that prevents the added fuel from passing through the filter 101 toward the downstream side (e.g., 300 °C).

In this exemplary embodiment, after the temperature of the EHC 100 has increased up to the first target temperature, fuel is then added from the fuel addition valve 6 so that the temperature of the EHC 100 increases up to a second target temperature. The second target temperature is the final target temperature of the EHC 100. The second target temperature is set in accordance with the type of the control for restoring the exhaust gas purification capacity of the filter 101. For example, the second target temperature is set to 300 to 500 °C for the NOx reduction process, to 600 to 650 °C for the SOx poisoning recovery process, and to 500 to 700 °C for the PM removal process. Used to increase the temperature of the EHC 100 etc., the fuel addition valve 6 forms a portion of "temperature increase device" of the invention together with the electric heater 100a.

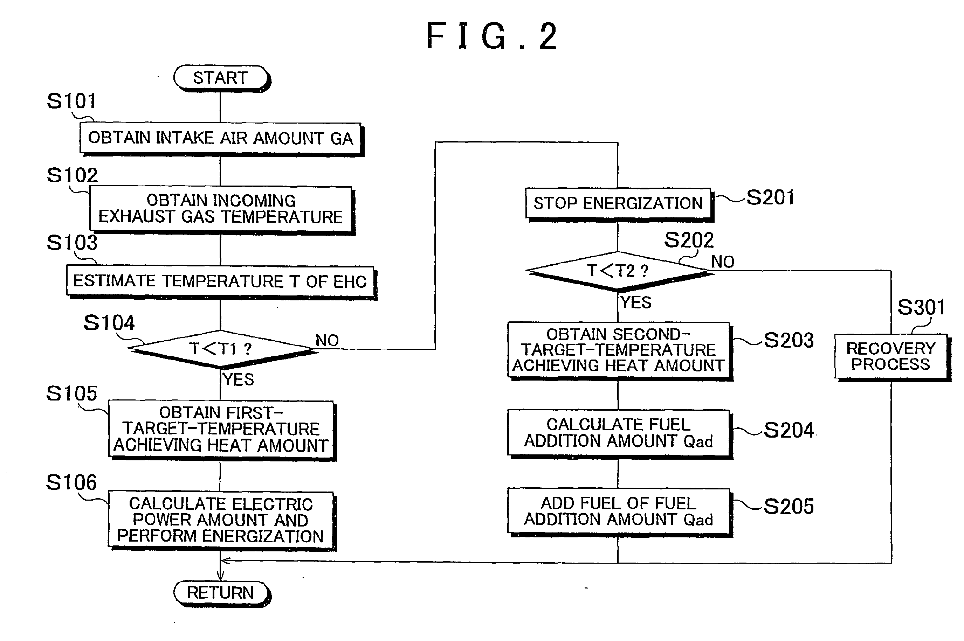

FIG. 2 is a flowchart showing the heating routine of this exemplary embodiment. This routine is provided in the form of a program stored in the ROM of the ECU 30 and is repeatedly executed at given time intervals during the operation of the internal combustion engine 1. Having the function of executing this routine, the ECU 30 corresponds to "temperature increase device" of the invention.

After the start of the routine, the ECU 30 first obtains an intake air amount GA of the internal combustion engine 1 in step 101. More specifically, in this step, the ECU obtains the intake air amount GA from the values detected by the airflow meter 4. After the process in step 101 has been finished, the ECU 30 then proceeds to step 102.

In step 102, the ECU 30 obtains the temperature of the exhaust gas entering the exhaust gas purification unit 10 (will be simply referred to as "incoming exhaust gas temperature" where necessary). More specifically, in this step, the ECU 30 obtains the incoming exhaust gas temperature based on the values output from the temperature sensor 11. Further, for example, if the relation among an engine speed Ne, an engine load TQ, and the incoming exhaust gas temperature has been empirically obtained and stored in the ECU 30 in the form of a control map, the incoming gas temperature may be determined by applying the engine speed Ne and the engine load TQ to the control map as parameters. In this case, the engine speed Ne is determined based on the value detected by the crank position sensor 7 and the engine load TQ is determined based on the value detected by the accelerator position sensor 8. After the process in step 102 has been finished, the ECU 30 then proceeds to step 103.

In step 103, the ECU 30 estimates a temperature T of the EHC 100 based on the temperature of the incoming gas estimated in step 102, etc. For example, the ECU 30 estimates the temperature T of the EHC 100 at least based on the temperature of the exhaust gas entering the EHC 100, the amount of heat that has been generated by the reducing agent (i.e., fuel) in the exhaust gas entering the EHC 100 being oxidized at the EHC 100, the thermal capacity of the EHC 100, and the flowrate of the exhaust gas entering the EHC 100. Further, in step 103, the temperature of the EHC 100 may be estimated using a method known in the related art. After the process in step 103 has been finished, the ECU 30 then proceeds to step 104. Having the function of estimating the temperature of the EHC 100, the ECU 30 corresponds to "temperature estimation device" of the invention.

In step 104, the ECU 30 determines whether the estimated temperature T of the EHC 100 is lower than the first target temperature T1. That is, in this step, the ECU 30 determines whether the electric heater 100a needs to be energized to increase the temperature T of the EHC 100 up to the first target temperature T1. If it is determined that the estimated temperature T of the EHC 100 is lower than the first target temperature T1, the ECU 30 then proceeds to step 105. On the other hand, if it is determined that the estimated temperature T of the EHC 100 is equal to or higher than the first target temperature T1, the ECU 30 proceeds to other step as described later.

In step 105, the ECU 30 calculates the amount of heat needed to increase the temperature of the EHC 100 up to the first target temperature T1 (will be simply referred to as "first-target-temperature-achieving heat amount" where necessary). In this step, for example, the ECU 30 calculates the first-target-temperature-achieving heat amount based on the difference between the first target temperature T1 and the estimated temperature T of the EHC 100, the thermal capacity of the EHC 100, and the flowrate of the exhaust gas entering the EHC 100. At this time, for example, if the relation between the intake air amount GA and the flowrate of the exhaust gas entering the EHC 100 has been empirically obtained in advance and stored in the form of a control map in the ECU, the flowrate of the exhaust gas entering the EHC 100 can be determined by applying the intake air amount GA to the control map as a parameter. Having the function of calculating the first-target-temperature-achieving heat amount, the ECU 30 corresponds to "heat amount calculation device" of the invention. After the process in step 105 has been finished, the ECU 30 then proceeds to step 106.

In step 106, the ECU 30 calculates the amount of electric power that needs to be applied to the electric heater 100a to generate heat of the first-target-temperature-achieving heat amount at the EHC 100 and energizes the electric heater 100a by applying the calculated amount of electric power thereto. As a result, the temperature of the EHC 100 increases, and the exhaust gas heated at the EHC 100 flows to the downstream side, whereby the temperature of the filter 101 also increases. After the process in step 106 has been finished, the ECU 30 finishes the present cycle of the routine.

Meanwhile, if it is determined in step 104 that the estimated temperature T of the EHC 100 is equal to or higher than the first target temperature T1, the ECU 30 then proceeds to step 201. In step 201, if the electric heater 100a is presently energized, the ECU 30 stops the energization. That is, because the temperature of the EHC 100 is presently determined to be equal to or higher than the first target temperature T1, it is not necessary to energize the electric heater 100a. After the process in step 201, the ECU 30 then proceeds to step 202.

In step 202, the ECU 30 determines whether the temperature T of the EHC 100 that has been estimated in step 103 is lower than the second target temperature T2, which has been set in advance. That is, in this step, the ECU 30 determines whether fuel needs to be added from the fuel addition valve 6 to further increase the temperature of the EHC 100. If it is determined in step 202 that the estimated temperature T of the EHC 100 is lower than the second target temperature T2, the ECU 30 then proceeds to step 203. On the other hand, if it is determined in step 202 that the estimated temperature T of the EHC 100 is equal to or higher than the second target temperature T2, the ECU 30 then proceeds to step 301.

In step 203, the ECU 30 calculates the amount of heat needed to increase the temperature of the EHC 100 up to the second target temperature T2 (will be simply referred to as "second-target-temperature-achieving heat amount" where necessary). In this step, for example, the ECU 30 calculates the second-target-temperature-achieving heat amount based on the difference between the second target temperature T2 and the estimated temperature T of the EHC 100, the thermal capacity of the EHC 100, and the flowrate of the exhaust gas entering the EHC 100. At this time, the flowrate of the exhaust gas entering the EHC 100 is determined based on the intake air amount GA. After the process in step 203 has been finished, the ECU 30 proceeds to step 204.

In step 204, the ECU 30 calculates a fuel addition amount Qad. The fuel addition amount Qad is the amount of fuel needed to generate heat of the second-target-temperature-achieving heat amount at the EHC 100. More specifically, the ECU 30 calculates the fuel addition amount Qad based on the rate at which the fuel added from the fuel addition valve 6 is oxidized when it passes through the EHC 100 (will be referred to as "fuel oxidization rate") and based on the second-target-temperature-achieving heat amount.

More specifically, the fuel oxidization rate corresponds to the ratio between the amount of fuel oxidized at the EHC 100 and the amount of fuel that enters the exhaust gas purification unit 10. The fuel oxidization rate changes according to the flowrate of the exhaust gas entering the exhaust gas purification unit 10 and the temperature of the EHC 100. Therefore, for example, the fuel oxidization rate can be read out from a control map defining the relation among the flowrate of the exhaust gas entering the EHC 100, the temperature of the EHC 100, and the fuel oxidization rate. In this case, for example, the temperature of the EHC 100 may either be the one estimated in the last cycle of the routine or the one actually detected. Further, as describe above, the flowrate of the exhaust gas entering the exhaust gas purification unit 10 may be obtained based on the intake air amount GA. After the process in step 204 has been finished, the ECU 30 then proceeds to step 205.

In step 205, the ECU 30 controls the fuel addition valve 6 to add fuel based on the fuel addition amount Qad calculated in step 204. After the process in step 205 has been finished, the ECU 30 finishes the present cycle of the routine.

On the other hand, in step 301, because the estimated temperature of the EHC 100 has been determined to be equal to or higher than the second target temperature T2, the ECU 30 executes the control for recovering the filter 101. At this time, for example, the ECU 30 makes the air-fuel ratio of the exhaust gas entering the filter 101 rich to cause reduction reactions of NOx or SOx. Alternatively, in this step, the ECU 30 makes the air-fuel ratio of the exhaust gas entering the filter 101 lean to oxidize and thus remove particulate matter. After the process in step 301 has been finished, the ECU 30 then finishes the present cycle of the routine.

For the purpose of improving the accuracy in estimating the temperature T of the EHC 100 in step 103, the estimation may be preformed by factoring in the amount of fuel that is injected from the in-cylinder injection valves (not shown in the drawings) and then discharged into the first exhaust pipe 5a without being combusted in the cylinders (unburned components). This is because such unburned components from the fuel injected from the in-cylinder injection valves are also oxidized at the EHC 100 and it increases the temperature of the EHC 100. Further, the temperature T of the EHC 100 may be estimated by factoring in the amount of heat that will be generated when the unburned components from the fuel injected from the in-cylinder injection valves are oxidized at the EHC 100. Note that the amount of such unburned components may be determined based on, for example, the HC concentration detected by the HC sensor 12 and the intake air amount GA detected by the airflow meter 4.

As described above, the foregoing routine is repeatedly executed at given time intervals during the operation of the internal combustion engine 1. Therefore, it may happen that the energization of the electric heater 100a or the fuel addition from the fuel addition valve 6 has already been started before the process in step 103 is executed in the present cycle of the routine. In such a case, the temperature T of the EHC 100 is estimated as follows.

First, a description will be made of how the temperature T of the EHC 100 is estimated in step 103 when the energization of the electric heater 100a has already been started. To begin with, the amount of heat that has been generated through the energization of the electric heater 100a is obtained. At this time, for example, if the relation among the time from the start of energization to the electric heater 100a, the amount of electric power applied to the electric heater 100a from the start of energization to the electric heater 100a, and the amount of heat generated from the start of energization to the electric heater 100a has been empirically obtained and stored in the ECU 30 in the form of a control map, the amount of heat that has been generated through the energization to the electric heater 100a can be determined by applying the energization time and the amount of the applied power to the control map as parameters. Then, the temperature T of the EHC 100 is estimated based on the incoming exhaust gas temperature and the amount of heat that has been generated by the energization of the electric heater 100a.

Next, a description will be made of how the temperature T of the EHC 100 is estimated in step 103 when the fuel addition from the fuel addition valve 6 has already been started. To begin with, the amount of heat that has been generated through the oxidization of the fuel injected from the fuel addition valve 6 (will be simply referred to as "fuel oxidization heat generation amount" where appropriate) is determined based on the amount of fuel that has been added since the beginning of the fuel addition from the fuel addition valve 6 and the fuel oxidization rate described above. Then, the temperature T of the EHC 100 is estimated based on the incoming exhaust gas temperature, the fuel oxidization heat generation amount, the thermal capacity of the EHC 100, and the flowrate of the exhaust gas entering the exhaust gas purification unit 10. At this time, as described above, the flowrate of the exhaust gas entering the exhaust gas purification unit 10 may be determined based on the intake air amount GA.

According to the routine described above, even when the temperature and/or flowrate of the exhaust gas entering the exhaust gas purification unit 10, etc. change as the operation state of the internal combustion engine 1 changes, the temperature of the EHC 100 can be accurately estimated by factoring in the changes in the temperature and/or flowrate of the exhaust gas entering the exhaust gas purification unit 10, etc., as needed. Further, because the routine is repeatedly executed at given time intervals during the operation of the internal combustion engine 1, the temperature of the EHC 100 is repeatedly estimated at the same time intervals. As such, the amount of electric power applied to the electric heater 100a until the temperature of the EHC 100 reaches the first target temperature T1 can be accurately controlled in a feed-forward manner.

Further, according to the routine described above, when executing the heating control for adding furl from the fuel addition valve 6 to the exhaust gas, the temperature of the EHC 100 is estimated by factoring in the amount of heat that will be generated when the fuel added to the exhaust gas, etc., are oxidized at the EHC 100. That is, the fuel addition amount Qad, which is the amount of fuel added from the fuel addition valve 6, is adjusted every time the temperature of the EHC 100 is estimated. As such, according to the routine described above, the amount of fuel that is added from the fuel addition valve 6 until the temperature of the EHC 100 reaches the second target temperature T2 can be accurately controlled.

Thus, even when changes have occurred in the factors influencing the temperature of the EHC 100, etc., the exhaust gas purification system of the foregoing exemplary embodiment prevents the EHC 100 from being heated excessively, thus minimizing the possibility of its heat deterioration. Also, during the heating control described above, the exhaust gas purification system of the foregoing exemplary embodiment minimizes the amount of electric power applied to the electric heater 100a and the amount of fuel added from the fuel addition valve 6, whereby the power consumption and the fuel consumption decrease accordingly.

Further, the exhaust gas purification system of the foregoing exemplary embodiment can maintain the temperature of the NOx catalyst at its activation temperature during the NOx reduction process, whereby the NOx purification rate increases. Further, during the PM removal process, the exhaust gas purification system of the foregoing exemplary embodiment maintains the temperature of the EHC 100 such that the temperature of the filter 101 can be increased by adding fuel from the fuel addition valve 6, and therefore particulate matter can be smoothly oxidized and thus removed. Further, the exhaust gas purification system of the foregoing exemplary embodiment maintains, also during the SOx poisoning recovery process, the temperature of the EHC 100 such that the temperature of the NOx catalyst can be increased by adding fuel from the fuel addition valve 6, and therefore the SOx poisoning can be smoothly cured. Further, through these processes, the exhaust gas purification system of the foregoing exemplary embodiment minimizes the amount of fuel that is discharged to the outside through the exhaust gas purification unit 10 after added from the fuel addition valve 6.

In the heating control of the foregoing exemplary embodiment, the temperature of the EHC 100 is increased to the first target temperature T1 by heating the EHC 100, etc. by energizing the electric heater 100a, and then to the second target temperature T2 by adding fuel from the fuel addition valve 6. Alternatively, for example, the temperature of the EHC 100 may be increased to the second target temperature T2 by energizing the electric heater 100a.

Further, while the EHC 100, etc. are heated by generating heat by energizing the electric heater 100a in the foregoing exemplary embodiment, the EHC 100, etc. may be heated using various other means, such as a combustion burner, as long as the EHC 100, etc. can be heated as needed.

Further, while the foregoing heating control is executed during the process for restoring the exhaust gas purification capacity of the filter 101 (e.g., NOx reduction process, SOx poisoning recovery process, PM removal process) in the foregoing exemplary embodiment, the heating control may be executed in various other fashions. For example, the foregoing heating control may be executed to maintain the activated condition of the EHC 100, etc. during the operation of the internal combustion engine 1. More specifically, when the temperature of the exhaust gas discharged from the internal combustion engine 1 is low and the temperatures of the EHC 100, etc. are lower than the activation temperatures, the EHC 100, etc. can be heated to the activation temperature by performing the foregoing heating control. This enhances the reliability of the exhaust gas purification by the EHC 100 and the filter 101.

## Claims

1. An exhaust gas purification system for an internal combustion engine (1), comprising:
an exhaust passage (5) one end of which is connected to the internal combustion engine (1) and through which exhaust gas discharged from the internal combustion engine (1) flows;
an exhaust gas purifier (100, 101) provided in the exhaust passage (5) and carrying a catalyst with an oxidizing property;
a heating device (100a) that heats the exhaust gas purifier (100, 101);
a temperature estimation device (30) that estimates the temperature of the exhaust gas purifier (100, 101);
a heat amount calculation device (30) that calculates the amount of heat needed to increase the temperature of the exhaust gas purifier (100, 101) to a first target temperature based on the temperature of the exhaust gas purifier (100, 101) estimated by the temperature estimation device (30); and
a temperature increase device (30, 100a) that increases the temperature of the exhaust gas purifier (100, 101) by controlling the heating device (100a) so that heat of the amount calculated by the heat amount calculation device (30) is applied from the heating device (100a) to the exhaust gas purifier (100, 101).

2. The exhaust gas purification system according to claim 1, **characterized in that**
the heating device (100a) is an electric heater, and
the temperature increase device (30, 100a) energizes the electric heater (100a) to provide heat of the amount calculated by the heat amount calculation device (30) to the exhaust gas purifier (100, 101).

3. The exhaust gas purification system according to claim 1 or 2, **characterized in that**
the exhaust gas purification capacity of the exhaust gas purifier (100, 101) is restored by supplying a reducing agent to the exhaust gas purifier (100, 101),
the temperature increase device further includes a reducing agent supply device that supplies the reducing agent to the exhaust gas entering the exhaust gas purifier (100, 101), and
when the estimated temperature of the exhaust gas purifier (100, 101) is equal to or higher than the first target temperature, the temperature increase device controls the reducing agent supply device to supply the reducing agent to the exhaust gas purifier (100, 101) so as to increase the temperature of the exhaust gas purifier (100, 101) up to a second target temperature that is higher than the first target temperature.

4. The exhaust gas purification system according to claim 3, **characterized in that**
the heat amount calculation device (30) calculates the amount of reducing agent needed to increase the temperature of the exhaust gas purifier (100, 101) to the second target temperature, and
the temperature increase device (30, 6) controls the reducing agent supply device to supply a reducing agent of the amount calculated by the heat amount calculation device (30) to the exhaust gas entering the exhaust gas purifier (100, 101).

5. The exhaust gas purification system according to any one of claims 1 through 4, **characterized in that**
the temperature estimation device (30) estimates the temperature of the exhaust gas purifier (100, 101) based on at least the temperature of the exhaust gas entering the exhaust gas purifier (100, 101), the amount of heat that is generated when the reducing agent contained in the exhaust gas entering the exhaust gas purifier (100, 101) is oxidized at the catalyst of the exhaust gas purifier (100, 101), the thermal capacity of the exhaust gas purifier (100, 101), and the flowrate of the exhaust gas entering the exhaust gas purifier (100, 101).

6. An exhaust gas purification method for an internal combustion engine (1) having: an exhaust passage (5) one end of which is connected to the internal combustion engine (1) and through which exhaust gas discharged from the internal combustion engine (1) flows; an exhaust gas purifier (100, 101) provided in the exhaust passage (5) and carrying a catalyst with an oxidizing property; a heating device (100a) that heats the exhaust gas purifier (100, 101); and a temperature increase device (30, 100a) that increases the temperature of the exhaust gas purifier (100, 101) by controlling the heating device (100a), the method being **characterized by** comprising:
estimating the temperature of the exhaust gas purifier (100, 101);
calculating the amount of heat needed to increase the temperature of the exhaust gas purifier (100, 101) to a first target temperature based on the estimated temperature of the exhaust gas purifier (100, 101); and
increasing the temperature of the exhaust gas purifier (100, 101) by applying the calculated amount of heat from the heating device (100a) to the exhaust gas purifier (100, 101).

7. The exhaust gas purification method according to claim 6, **characterized by** further comprising:
supplying, when the estimated temperature of the exhaust gas purifier (100, 101) is equal to or higher than the first target temperature, a reducing agent to the exhaust gas purifier (100, 101) so as to increase the temperature of the exhaust gas purifier (100, 101) up to a second target temperature that is higher than the first target temperature.

8. The exhaust gas purification method according to claim 7, **characterized by** further comprising:
calculating the amount of reducing agent needed to increase the temperature of the exhaust gas purifier (100, 101) to the second target temperature, and
supplying the calculated amount of reducing agent from the reducing agent supply device.

9. The exhaust gas purification method according to any one of claims 6 through 8, **characterized in that**
the temperature of the exhaust gas purifier (100, 101) is estimated based on at least the temperature of the exhaust gas entering the exhaust gas purifier (100, 101), the amount of heat that is generated when the reducing agent contained in the exhaust gas entering the exhaust gas purifier (100, 101) is oxidized at the catalyst of the exhaust gas purifier (100, 101), the thermal capacity of the exhaust gas purifier (100, 101), and the flowrate of the exhaust gas entering the exhaust gas purifier (100, 101).
